# EUROPEAN PATENT APPLICATION

(11) **EP 4 726 610 A1**
(43) Date of publication of application: **15.04.2026**
(21) Application number: 25207354.9
(22) Date of filing: 07.10.2025
(51) Int. Cl.: G06N 3/098, G06F 9/50, G06N 3/0985, G06N 20/00, G06Q 30/0601

(54) **AN AI-DRIVEN PRODUCT CONFIGURATOR**

(30) Priority: 08.10.2024 IN 202421076297
(71) Applicant: Vertiv Corporation, Westerville, OH 43082 (US)
(72) Inventor: KADAM, Girish, Westerville, 43082 (US); MAKWANA, Parenkumar, Westerville, 43082 (US)
(74) Representative: Cousens, Nico

(57) **Abstract**

The present invention relates to an AI-driven product configurator that pre-processes data collected from different sources, extract relevant features from preprocessed data, infer results through usage of ML models, and verifies inferred results. Further, ML models are deployed on an edge device where computing resources are dynamically allocated. Detailed analytical reports including visualizations, summaries, and actionable insights are generated, and alerts or notifications are triggered based on predefined thresholds, detected anomalies, or critical conditions identified in the data.

## Description

The present disclosure relates to the field of sales automation. More specifically, the present disclosure relates to sales automation using Artificial Intelligence/Machine Learning.

### DEFINITIONS

As used in the present disclosure, the following terms are generally intended to have the meaning as set forth below, except to the extent that the context in which they are used to indicates otherwise.

**SHAP (Shapley Additive Explanations):** The term "SHAP (Shapley Additive Explanations)" is a method used to explain the output of machine learning models by assigning each feature an importance value based on its contribution to the prediction, using principles from cooperative game theory.

**LIME (Local Interpretable Module-agnostic Explanations):** The term "LIME (Local Interpretable Model-agnostic Explanations)" is a technique that explains individual predictions of any machine learning model by approximating it with a simpler, interpretable model in the local region around the prediction.

**A Continuous Integration/Continuous Deployment (CI/CD) Pipeline:** The Continuous Integration/Continuous Deployment (CI/CD) pipeline automates the process of integrating code changes, testing them, and deploying software updates to production quickly and reliably, ensuring smooth and efficient software delivery.

**Ensemble Learning Approaches:** The Ensemble learning approaches combine predictions from multiple machine learning models to improve accuracy, robustness, and overall performance compared to individual models.

**Federated Learning:** The Federated Learning is a decentralized machine learning approach where models are trained across multiple devices or servers without sharing the actual data, ensuring privacy while leveraging distributed data sources.

**Zero-Shot Learning:** The Zero-Shot Learning is a machine learning approach where a model can recognize and classify new, unseen classes without having been explicitly trained on them, using prior knowledge and relationships between known and unknown classes.

The above definitions are in addition to those expressed in the art.

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also correspond to implementations of the present technology.

Sales representatives encounter numerous challenges in accurately configuring products that align with customer needs due to the overwhelming variety of product options and intricate technical specifications. The complexity of configuration process often leads to miscommunication, errors in product selection, and incorrect orders, which can significantly delay the sales cycle. This not only reduces overall efficiency but also increases the likelihood of order reworks, additional costs, and wasted resources. Furthermore, the manual nature of the current configuration process makes it difficult for sales teams to keep up with fast-paced customer demands, resulting in slower response times. As a consequence, the customer experience becomes poor, leading to frustration, diminished trust, and lower levels of satisfaction. These inefficiencies can also lead to lost sales opportunities and reduced customer retention.

There is therefore a need for an AI-driven product configurator that alleviates the aforementioned drawbacks.

### OBJECTS

An object of the present disclosure is to provide reduced design time through real-time visual feedback and automated product configuration.

Another object of the present disclosure is to provide a user-friendly interface that simplifies complex product configurations, ensuring an intuitive and efficient user experience.

Still another object of the present disclosure is to provide a system for cost savings by minimizing human errors through automated configuration processes and accurate product selection.

Yet another object of the present disclosure is to provide a system for real-time data retrieval, ensuring up-to-date and accurate information throughout the configuration process.

Still another object of the present disclosure is to provide a system for improving operational efficiency by automating complex tasks and streamlining workflows throughout the product configuration process.

### SUMMARY

This summary is provided to introduce aspects related to an AI-driven product configurator and the aspects are further described below in the detailed description. This summary is not intended to identify essential features of the claimed subject matter nor is it intended for use in determining or limiting the scope of the claimed subject matter.

The present disclosure relates to an AI-driven product configurator including different modules. The AI-driven product configurator included an identifying module configured to identify a requirement based on a user input or pre-determined objectives. A data collection module, operatively connected to the identifying module, is configured to gather and compile data relevant to the identified requirement from one or more data sources. A data pre-processing module, communicatively linked to the data collection module, is configured to clean, normalize, and structure the data for further processing. An inference module, operatively connected to the data pre-processing module, comprises one or more machine learning models, and is configured to generate an output including one or more of insights, predictions, and classifications based on pre-processed data. A feature extraction module, integrated with the inference module, is configured to extract relevant features from the pre-processed data for enhanced processing and accurate decision-making. A verification module, operatively linked to the inference module, is configured to evaluate the output of the inference module to determine whether the output meets a predefined acceptability criterion.

A model deployment module, communicatively connected to the verification module, is configured to deploy the one or more machine learning models in a real-time or offline environment based on verified results obtained from the verification module. A model serving module, operatively linked to the model deployment module, is configured to host deployed machine learning models for receiving a real-time input and providing corresponding predictions. A feedback module, integrated with the model serving module, is configured to collect real-time data and system performance metrics, and relay this information for updating the one or more machine learning models. An edge deployment module **320,** communicatively connected to the model deployment module, is configured to deploy the one or more machine learning models on an edge device present near the one or more data sources, for optimized processing.

A hardware allocation module, integrated with the edge deployment module, is configured to allocate computing resources including CPU, GPU, and RAM to support efficient model inference and execution. A report generation module, operatively connected to the inference module, is configured to generate reports based on the output of the inference module. An alert module, communicatively linked to the inference module and the report generation module, is configured to trigger alerts based on the predictions.

In one aspect, the feedback module is further configured to update the one or more machine learning models based on real-time operational data to enhance model accuracy and performance. Also, the feedback module further comprises an explainability sub-module, utilizing SHAP (Shapley Additive Explanations) or LIME (Local Interpretable Module-agnostic Explanations), to generate interpretable insights into the machine learning model's decision-making process.

In one aspect, the edge deployment module is also configured to optimize model performance by enabling low-latency inference and decision-making at the data source, reducing the need for centralized processing. Further, the edge deployment module implements a decentralized learning paradigm, enabling each edge device to perform localized training on data captured within its vicinity and contribute to a federated global model, ensuring privacy-preserving learning and reducing network congestion.

In one aspect, the verification module determines whether the output of the inference module meets predefined thresholds for accuracy. Further, the verification module integrates a continuous integration/continuous deployment (CI/CD) pipeline to automatically validate and redeploy updated models based on new data inputs and system performance metrics.

In one aspect, the hardware allocation module dynamically adjusts resource allocation based on complexity of the data processed and demands of the inference module to maintain efficient system operation. Further, the hardware allocation module is configured to employ memory-efficient inference techniques to optimize model performance in low-bandwidth environments.

In one aspect, the report generation module is also configured to produce detailed analytics reports including visualizations, and transmit the analytics reports to a user interface for further action. The report generation module also includes real-time data visualization capabilities, utilizing advanced graphical rendering techniques to provide interactive dashboards and reports that update in real time as new data is processed by the system.

In one aspect, the alert module is also configured to generate automated alerts in response to predefined conditions detected by the inference module. The alert module utilizes an adaptive thresholding mechanism that dynamically adjusts alert thresholds based on contextual data patterns.

In one aspect, the feature extraction module is further configured to apply one or more of manual and automated feature selection techniques, to ensure the robustness and contextual relevance of extracted features in presence of evolving data patterns.

In one aspect, the inference module implements an adaptive neural architecture search (NAS) framework capable of dynamically generating optimal model architectures, based on real-time evaluation of data complexity.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The accompanying drawings constitute a part of the description and are used to provide a further understanding of the present disclosure.
**Fig. 1** illustrates a block diagram showing operational components of an AI-driven product configurator.
**Fig. 2** illustrates a block diagram showing hardware and functional components of the AI-driven product configurator.
**Figs. 3a** and **3b** cumulatively illustrate a block diagram showing different modules of the AI-driven product configurator.
**Fig. 4** illustrates a process flow of operation of the AI-driven product configurator.

A more complete understanding of the present disclosure and its embodiments thereof may be acquired by referring to the following description and the accompanying drawings.

### LIST OF REFERENCE NUMERALS

100 - System
102 - User Device
104 - Artificial Intelligence Module
106 - Visual System Design (VSD) Module
108 - Questionable Module
110 - Ordering Module
112 - Cloud Integration Module
114 - Identifying Module
116 - Data Collection Module
118 - Data Pre-processing Module
120 - Inference Module
122 - Feature Extraction Module
124 - Verification Module
126 - Model Deployment Module
128 - Model Serving Module
130 - Feedback Module
132 - Edge Deployment Module
134 - Memory Allocation Module
136 - Report Generation Module
138 - Alert Module

### DETAILED DESCRIPTION

Exemplary embodiments now will be described with reference to the accompanying drawings. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

It is to be noted, however, that the reference numerals used herein illustrate only typical embodiments of the present subject matter, and are therefore, not to be considered for limiting its scope, for the subject matter may admit to other equally effective implementation.

The detailed description includes specific details for the purpose of providing a thorough understanding of the present disclosure. However, it will be apparent to those skilled in the art that the present disclosure may be practiced without these specific details.

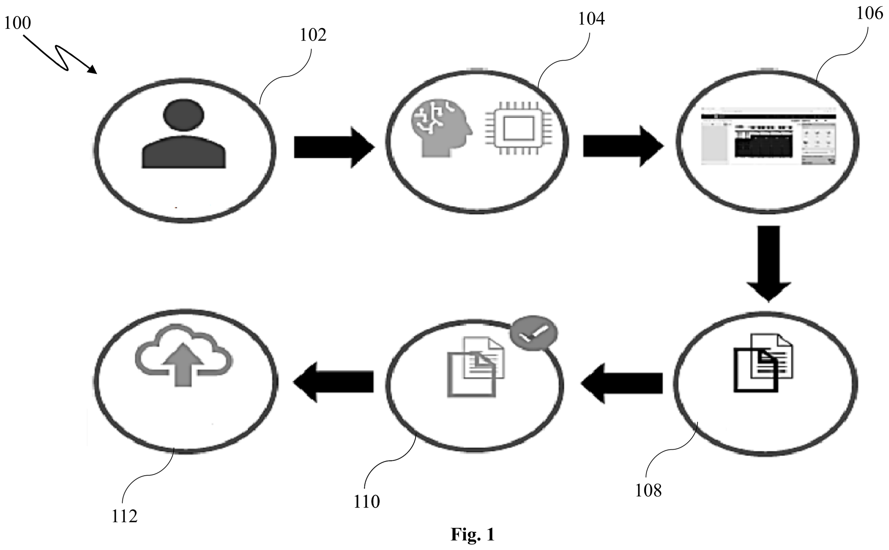

**Fig. 1** illustrates a block diagram showing operational elements of an AI-driven product configurator **100** (alternatively referred as a system **100).** The system **100** includes a user device **102,** an artificial intelligence (AI) module **104,** a visual system design (VSD) module **106,** a questionable module **108,** an ordering module **110,** and a cloud integration module **112.**

The user device **102** may be any electronic device equipped with a display and internet connectivity, such as a smartphone, a tablet, or a personal computer. The user device **102** may enable interaction between customers, sales representatives, and the system **100.** The user device **102** may serve as the primary interface through which users can select products, configure them, and visualize them in 2D, 3D, or AR/VR environments.

The user device **102** may comprise a web browser or a dedicated mobile application interface that connects to the system **100.**

The AI module **104** may be configured to process user inputs, retrieve relevant data from integrated systems (such as product lifecycle management (PLM), VSD, and enterprise resource planning (ERP) systems), and provide intelligent suggestions. The AI module **104** may analyze the customer's requirements and recommend suitable product configurations based on predefined parameters such as customer needs, technical specifications, and product availability. The AI module **104** may utilize machine learning to train on historical sales data, customer preferences, and technical specifications to make accurate product recommendations.

The visual system design (VSD) module **106** may enable the user to visualize the configured product in 2D and 3D representations. The VSD module **106** may fetch product specifications from the AI module **104** and generate visual models that allow the user to rotate, zoom, and inspect the product from various angles.

The quotation module **108** may be responsible for calculating the total cost of the configured product, including taxes, international compliance fees, and any other applicable charges. Further, the quotation module **108** may automatically update the product pricing as the user adjusts the configuration options, ensuring that the final price accurately reflects specifications selected by the user.

The ordering module **110** may facilitate product configuration process, enabling the user to submit an order for the configured product. The ordering module **110** may verify the product's technical feasibility, ensure that a selected configuration complies with all regulatory standards, and send a finalized order to procurement and supply chain team for processing.

The cloud integration module **112** may connect the AI-driven product configurator **100** to cloud-based storage systems, enabling the AI-driven product configurator **100** to store and retrieve data as needed. The cloud integration module **112** may ensure product configurations, visual models, and order details are securely saved and can be accessed by authorized personnel, such as sales representatives and data administrators.

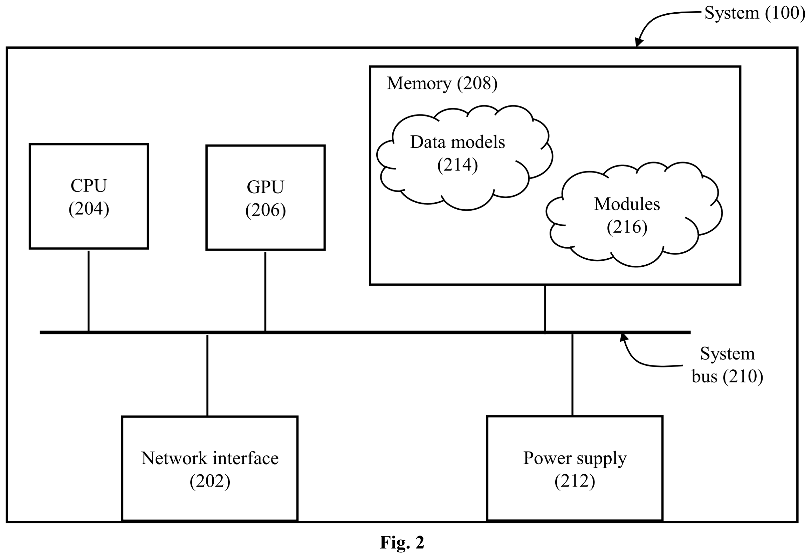

**Fig. 2** illustrates a block diagram showing hardware and functional components of the AI-driven product configurator (alternatively referred as a system **100).** The system **100** may be implemented over a cloud network. The system **100** may comprise one or more network interfaces **202** (e.g., wired, wireless, etc.), a Central Processing Unit (CPU) **204,** a Graphical Processing Unit (GPU) **206,** and a memory **208** interconnected by a system bus **210,** and a power supply **212.**

The one or more network interfaces **202** may be used to provide input or fetch output from the system **100.** The one or more network interfaces **202** may be implemented as a Command Line Interface (CLI) or a Graphical User Interface (GUI). Further, Application Programming Interfaces (APIs) may also be used for remotely interacting with edge systems and cloud servers.

The CPU **204** may comprise hardware elements or hardware logic adapted to execute the software programs and manipulate data structures. The CPU **204** may be a general purpose processor (e.g., INTEL^{®} or Advanced Micro Devices^{®} (AMD) microprocessors) and/or a special purpose processor (e.g., digital signal processors or Xilinx^{®} System On Chip (SOC) Field Programmable Gate Array (FPGA) processor), MIPS/ARM-class processor, a microprocessor, a digital signal processor, an application specific integrated circuit, a microcontroller, a state machine, or any type of programmable logic array.

The GPU **206** is a specialized electronic circuit designed for digital image processing and to accelerate computer graphics. The GPU **206** may be developed by any manufacturer including NVIDIA, AMD, or Intel, and may have a suitable architectural design, such as integrated, dedicated, or CUDA.

The memory **208** may include, but is not limited to, non-transitory machine-readable storage devices such as hard drives, magnetic tape, floppy diskettes, optical disks, Compact Disc Read-Only Memories (CD-ROMs), and magnetooptical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

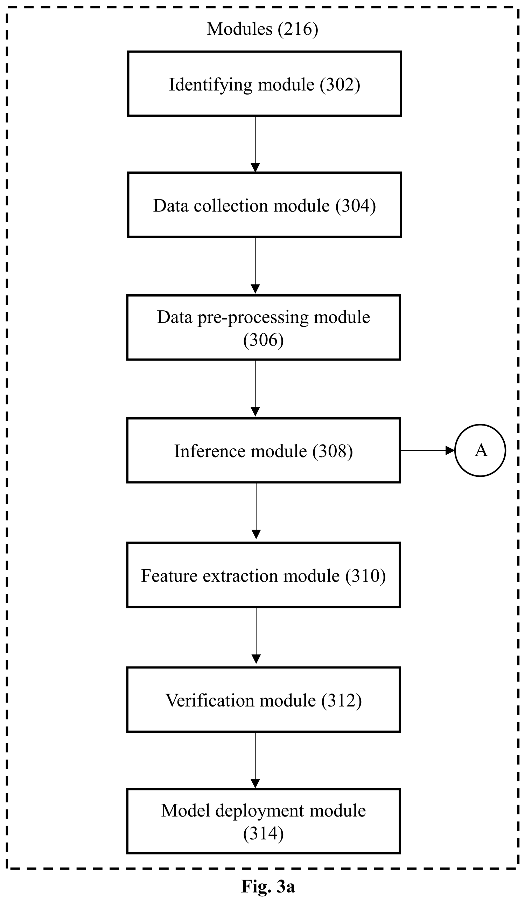

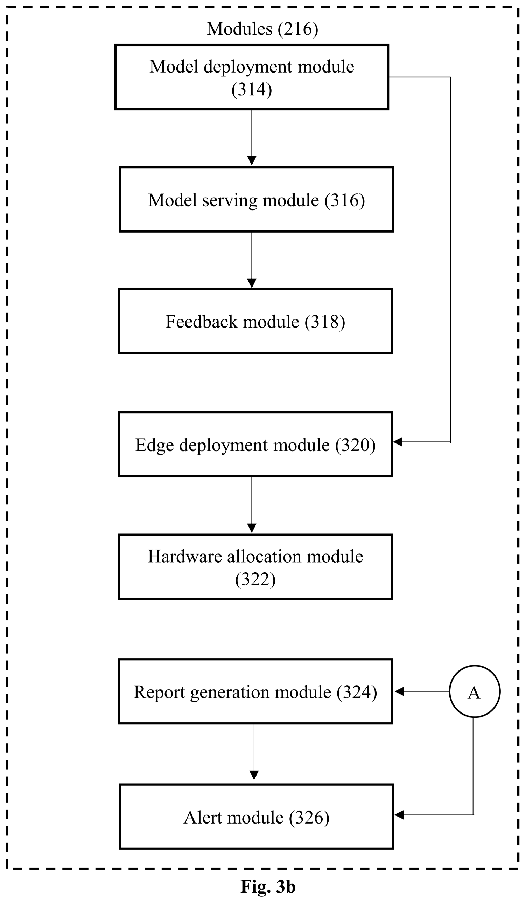

The memory **208** comprises a plurality of storage locations that are addressable by the CPU **204,** the GPU **206,** and the network interfaces **202** for storing software programs and other necessary information associated with the embodiments described herein. For example, the memory **208** stores data models **214** and modules **216.** The data models **214** refer to Machine Learning models trained for performing one or more specialized tasks. The modules **216** refer to different segments of a software program, where each module is responsible for performing a specific application. Different modules used in the present disclosure and their manner of operation has been described successively with reference to **Fig. 3****.**

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

**Figs. 3a** and **3b** cumulatively illustrate a block diagram showing different modules **216** of the AI-driven product configurator. An identifying module **302** is configured to identify a requirement based on a user input or pre-determined objectives. A data collection module **304,** operatively connected to the identifying module **302,** is configured to gather and compile data relevant to the identified requirement from one or more data sources. A data pre-processing module **306,** communicatively linked to the data collection module **304,** is configured to clean, normalize, and structure the data for further processing. An inference module **308,** operatively connected to the data pre-processing module **306,** comprises one or more machine learning models, and is configured to generate an output including one or more of insights, predictions, and classifications based on pre-processed data. A feature extraction module **310,** integrated with the inference module **308,** is configured to extract relevant features from the pre-processed data for enhanced processing and accurate decision-making. A verification module **312,** operatively linked to the inference module **308,** is configured to evaluate the output of the inference module **308** to determine whether the output meets a predefined acceptability criterion.

A model deployment module **314,** communicatively connected to the verification module **312,** is configured to deploy the one or more machine learning models in a real-time or offline environment based on verified results obtained from the verification module **312.** A model serving module **316,** operatively linked to the model deployment module **314,** is configured to host deployed machine learning models for receiving a real-time input and providing corresponding predictions. A feedback module **318,** integrated with the model serving module **316,** is configured to collect real-time data and system performance metrics, and relay this information for updating the one or more machine learning models. An edge deployment module **320,** communicatively connected to the model deployment module **314,** is configured to deploy the one or more machine learning models on an edge device present near the one or more data sources, for optimized processing.

A hardware allocation module **322,** integrated with the edge deployment module **320,** is configured to allocate computing resources including CPU, GPU, and RAM to support efficient model inference and execution. A report generation module **324,** operatively connected to the inference module **308,** is configured to generate reports based on the output of the inference module **308.** An alert module **326,** communicatively linked to the inference module **308** and the report generation module **324,** is configured to trigger alerts based on the predictions.

The feedback module **318** is further configured to update the one or more machine learning models based on real-time operational data to enhance model accuracy and performance. Also, the feedback module **318** further comprises an explainability sub-module, utilizing SHAP (Shapley Additive Explanations) or LIME (Local Interpretable Module-agnostic Explanations), to generate interpretable insights into the machine learning model's decision-making process.

The edge deployment module **320** is also configured to optimize model performance by enabling low-latency inference and decision-making at the data source, reducing the need for centralized processing. Further, the edge deployment module **320** implements a decentralized learning paradigm, enabling each edge device to perform localized training on data captured within its vicinity and contribute to a federated global model, ensuring privacy-preserving learning and reducing network congestion.

The verification module **312** determines whether the output of the inference module **308** meets predefined thresholds for accuracy. Further, the verification module **312** integrates a continuous integration/continuous deployment (CI/CD) pipeline to automatically validate and redeploy updated models based on new data inputs and system performance metrics.

The hardware allocation module **322** dynamically adjusts resource allocation based on complexity of the data processed and demands of the inference module **308** to maintain efficient system operation. Further, the hardware allocation module **322** is further configured to employ memory-efficient inference techniques to optimize model performance in low-bandwidth environments.

The report generation module **324** is also configured to produce detailed analytics reports including visualizations, and transmit the analytics reports to a user interface for further action. The report generation module **324** also includes real-time data visualization capabilities, utilizing advanced graphical rendering techniques to provide interactive dashboards and reports that update in real time as new data is processed by the system **100.**

The alert module **326** is also configured to generate automated alerts in response to predefined conditions detected by the inference module **308.** The alert module **326** utilizes an adaptive thresholding mechanism that dynamically adjusts alert thresholds based on contextual data patterns.

The feature extraction module **310** is further configured to apply one or more of manual and automated feature selection techniques, to ensure the robustness and contextual relevance of extracted features in presence of evolving data patterns. The inference module **308** implements an adaptive neural architecture search (NAS) framework capable of dynamically generating optimal model architectures, based on real-time evaluation of data complexity.

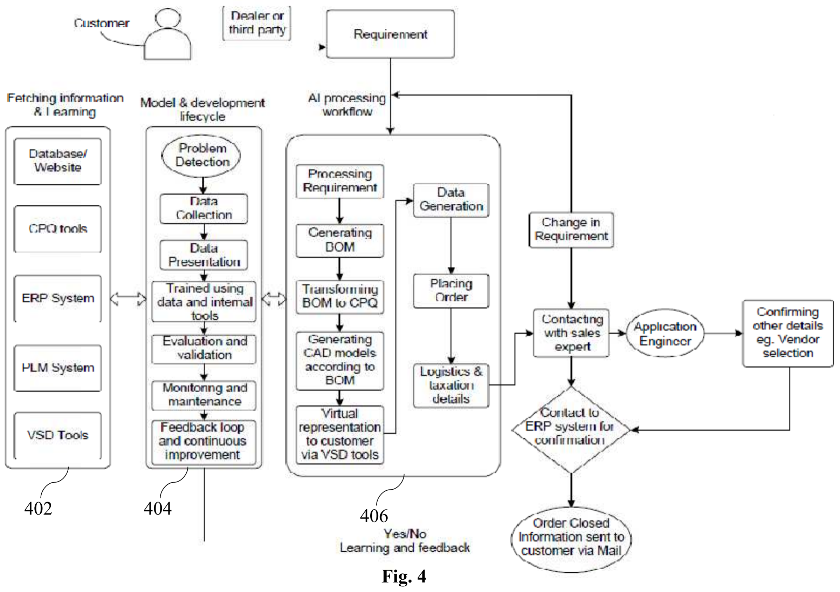

**Fig. 4** illustrates a process flow of operation of the AI-driven product configurator **100.** Major phases of the process flow include a fetching information and learning phase **402,** an AI model development phase **404,** and an AI processing phase **406.**

In the fetching information and learning phase **402,** the AI-driven product configurator **100** gathers relevant data from multiple sources such as databases and websites, configure price quote (CPQ) tools, enterprise resource planning (ERP) tools, product lifecycle management (PLM) tools, and solution designer (SD) tools.

The relevant data gathered from the multiple sources may include necessary product information, configuration rules, and pricing, forming the basis for generating accurate product configurations. In the AI model development phase **404,** the Al-driven product configurator **100** processes customer requirements through problem definition, data collection, and preparation stages. An AI model may be trained on historical sales data and continuously improved via a feedback loop, ensuring that the product recommendations are accurate and meet customer needs. The AI-driven product configurator **100** may evaluate and validate the configurations to ensure they are technically feasible, compliant, and aligned with customer requirements.

The AI processing phase **406** may involve processing customer requirements, generating a bill of materials (BOM), and transferring the BOM to a CPQ tool for pricing calculations. The AI-driven product configurator **100** generates computer-aided design (CAD) models based on the BOM, allowing a customer/user to visualize the products in 2D, 3D, and even AR/VR environments through the VSD tool. The system **100** may generate a quote that includes all costs such as taxes, compliance fees, and logistics details. Once the customer approves the configuration, the AI-driven product configurator **100** may place the order and communicate with the ERP system to handle logistics and taxation. The AI-driven product configurator **100** may allow for real-time adjustments if a customer changes the configurations, ensuring a seamless post-processing workflow with minimal delays.

### TECHNICAL ADVANCEMENTS

The present disclosure described herein above has several technical advantages including, but not limited to, the AI-driven product configurator, which:
i. provide a user-friendly interface that simplifies complex product configurations;
ii. provide automated generation of BOM with tax and legal compliance details;
iii. provide accuracy in product selection by minimizing errors during the configuration process;
iv. provide enhanced customer experience by reducing configuration time and improving order transparency;
v. provide cost savings by minimizing human errors and ensuring precise procurement and supply chain requirements; and
vi. provide increased sales efficiency by automating the end-to-end sales process, and improving the customer-focused approach.

The specification may refer to "an", "another", "one" or "some" embodiment(s) in several locations.

The terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps or acts are in some way inherently mutually exclusive.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skills in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. A system (100) for automated data analysis and decision-making, said system (100) comprising:
an identifying module (302) configured to identify a requirement based on a user input or pre-determined objectives;
a data collection module (304), operatively connected to the identifying module (302), configured to gather and compile data relevant to the identified requirement from one or more data sources;
a data pre-processing module (306), communicatively linked to the data collection module (304), configured to clean, normalize, and structure the data for further processing;
an inference module (308), operatively connected to the data pre-processing module (306), comprising one or more machine learning models, and configured to generate an output including one or more of insights, predictions, and classifications based on pre-processed data;
a feature extraction module (310), integrated with the inference module (308), configured to extract relevant features from the pre-processed data for enhanced processing and accurate decision-making;
a verification module (312), operatively linked to the inference module (308), configured to evaluate the output of the inference module (308) to determine whether the output meets a predefined acceptability criterion;
a model deployment module (314), communicatively connected to the verification module (312), configured to deploy the one or more machine learning models in a real-time or offline environment based on verified results obtained from the verification module (312);
a model serving module (316), operatively linked to the model deployment module (314), configured to host deployed machine learning models for receiving a real-time input and providing corresponding predictions;
a feedback module (318), integrated with the model serving module (316), configured to collect real-time data and system performance metrics, and relay this information for updating the one or more machine learning models;
an edge deployment module (320), communicatively connected to the model deployment module (314), configured to deploy the one or more machine learning models on an edge device present near the one or more data sources, for optimized processing;
a hardware allocation module (322), integrated with the edge deployment module (320), configured to allocate computing resources including CPU, GPU, and RAM to support efficient model inference and execution;
a report generation module (324), operatively connected to the inference module (308), configured to generate reports based on the output of the inference module (308); and
an alert module (326), communicatively linked to the inference module (308) and the report generation module (324), configured to trigger alerts based on the predictions.

2. The system (100) as claimed in claim 1, wherein said feedback module (318) is further configured to update the one or more machine learning models based on real-time operational data to enhance model accuracy and performance, and/or
wherein said feedback module (318) further comprises an explainability sub-module, utilizing Shapley Additive Explanations "SHAP" or Local Interpretable Module-agnostic Explanations "LIME", to generate interpretable insights into the machine learning model's decision-making process.

3. The system (100) as claimed in claim 1 or 2, wherein said edge deployment module (320) is further configured to optimize model performance by enabling low-latency inference and decision-making at the data source, reducing the need for centralized processing, and/or
wherein said edge deployment module (320) implements a decentralized learning paradigm, enabling each edge device to perform localized training on data captured within its vicinity and contribute to a federated global model, ensuring privacy-preserving learning and reducing network congestion.

4. The system (100) as claimed in any preceding claim, wherein said verification module (312) determines whether the output of the inference module (308) meets predefined thresholds for accuracy, and/or
wherein said verification module (312) further integrates a continuous integration/continuous deployment (CI/CD) pipeline to automatically validate and redeploy updated models based on new data inputs and system performance metrics.

5. The system (100) as claimed in any preceding claim, wherein said hardware allocation module (322) dynamically adjusts resource allocation based on complexity of the data processed and demands of the inference module (308) to maintain efficient system operation, and/or
wherein said hardware allocation module (322) is further configured to employ memory-efficient inference techniques to optimize model performance in low-bandwidth environments.

6. The system (100) as claimed in any preceding claim, wherein said report generation module (324) is configured to produce detailed analytics reports including visualizations, and transmit the analytics reports to a user interface for further action, and/or
wherein said report generation module (324) further includes real-time data visualization capabilities, utilizing advanced graphical rendering techniques to provide interactive dashboards and reports that update in real time as new data is processed by the system (100).

7. The system (100) as claimed in any preceding claim, wherein said alert module (326) is further configured to generate automated alerts in response to predefined conditions detected by the inference module (308).

8. The system (100) as claimed in any preceding claim, wherein said alert module (326) utilizes an adaptive thresholding mechanism that dynamically adjusts alert thresholds based on contextual data patterns.

9. The system (100) as claimed in any preceding claim, wherein said feature extraction module (310) is further configured to apply one or more of manual and automated feature selection techniques, to ensure the robustness and contextual relevance of extracted features in presence of evolving data patterns.

10. The system (100) as claimed in any preceding claim, wherein said inference module (308) implements an adaptive neural architecture search "NAS" framework capable of dynamically generating optimal model architectures, based on real-time evaluation of data complexity.

11. A method of implementing automated data analysis and decision-making, comprising the steps of:
identifying a requirement or task through an identifying module (302), wherein the requirement is dynamically received from user input or system-generated objective;
collecting data from one or more data sources using a data collection module (304), wherein the one or more data sources include sensor networks, cloud storage, and edge devices, and the data is synchronized in real-time to ensure consistency;
pre-processing the data via a data pre-processing module (306), wherein the pre-processing involves cleaning, normalizing, reducing noise, and augmenting data for further processing;
extracting relevant features from pre-processed data using a feature extraction module (310);
inferring results through usage of one or more machine learning models by an inference module (308), wherein the inference includes one or more of generating predictions, classifications, and decisions using deep learning models and ensemble learning approaches, and wherein the model selection is dynamically adjusted based on input data characteristics;
verifying an output of the inference module (308) using a verification module (312), wherein the verifying includes one or more of cross-validation, statistical analysis, and uncertainty quantification to determine whether the output meets a predefined acceptability criterion;
deploying the one or more machine learning models using a model deployment module (314), based on verified results obtained from the verification module (312);
serving the model through a model serving module (316), wherein real-time model requests are handled through a load-balancing mechanism and computational resources are dynamically scaled based on input complexity and system demand;
generating a feedback loop through a feedback module (318), wherein real-time system outputs and performance metrics are continuously monitored and used to update the one or more machine learning models through reinforcement learning or continuous model updates;
deploying the one or more machine learning models on an edge device via an edge deployment module (320), wherein the one or more machine learning model performs localized inference at the data source and can retrain locally on new data, reducing the need for centralized communication;
allocating computing resources through a hardware allocation module (322), wherein the computing resources including one or more of CPU, GPU, and RAM are dynamically managed across distributed environments to optimize performance during model inference;
generating reports using a report generation module (324), wherein the report generation module (324) creates detailed analytical reports including visualizations, summaries, and actionable insights based on the output of the inference module (308); and
triggering alerts or notifications through an alert module (326), based on predefined thresholds, detected anomalies, or critical conditions identified in the data.

12. The method as claimed in claim 11, wherein said step of pre-processing the data further includes applying context-aware normalization techniques that adapt to the type and variability of the data to optimize pre-processing performance.

13. The method as claimed in claim 11 or 12, wherein said step of verifying the output of the inference module (120) includes integrating a continuous integration and continuous deployment (CI/CD) pipeline, enabling automatic validation and redeployment of updated models based on system performance metrics and data changes.

14. The method as claimed in any of claims 11 to 13, wherein said step of deploying the one or more machine learning models on the edge devices includes implementing a decentralized learning framework, wherein each edge device performs local model training on the data collected within its region and contributes to development of a federated global model, maintaining data privacy and reducing latency.

15. The method as claimed in any of claims 11 to 14, wherein said method step of allocating computing resources includes employing a memory-efficient inference technique including zero-shot learning or federated learning, to optimize performance in low-bandwidth environments during edge deployments.
